# EUROPEAN PATENT APPLICATION

(11) **EP 1 533 792 A1**
(43) Date of publication of application: **25.05.2005**
(21) Application number: 03736295.1
(22) Date of filing: 27.06.2003
(51) Int. Cl.: G11B 5/31, G11B 5/39

(54) **THIN FILM MAGNETIC HEAD AND METHOD OF PRODUCING THE HEAD**

(30) Priority: 27.06.2002 JP 2002188505
(71) Applicant: Japan Science and Technology Agency, Kawaguchi-shi, Saitama 332-0012 (JP)
(72) Inventor: YAMAKAWA, Kiyoshi, Akita-shi, Akita 010-0966 (JP); ISE, Kazuyuki, Akita-shi, Akita 010-1436 (JP)
(74) Representative: Gerstein, Hans Joachim
(86) International application number: PCT/JP2003/008218
(87) International publication number: WO 2004/003892

(57) **Abstract**

A magnetic head (1) is constituted by depositing two return yokes (8a, 8b), and two coils (6a, 6b) to sandwich a main pole (4) on a substrate (2), polishing an end surface extending in a deposition direction to form an opposite surface (12), and forming an auxiliary yoke (10) in the opposite surface (12). The auxiliary yoke (10) has a rectangular opening for exposing a tip surface (4a) of the main pole (4) to the opposite surface (12). An end surface (10a) of the opening faces the main pole (4) in noncontact therewith through a predetermined gap.

## Description

### Technical Field

The present invention relates to a magnetic head for writing and/or reading data to/from a magnetic recording medium, and more particularly to a thin-film magnetic head used for a magnetic recording device represented by a hard disk drive (simply referred to as an HDD, hereinafter), and its manufacturing method.

### Background Art

As a thin-film magnetic head, for example, there has conventionally been known a magnetic head for writing and/or reading data to/from a magnetic disk of an HDD. This magnetic head is moved roughly in a radial direction of the magnetic disk by swinging a suspension arm with respect to the rotating magnetic disk.

Usually, this type of magnetic head is formed by depositing a coil, a main pole, a return yoke and the like on a substrate, and polishing an end surface extending in a deposition direction of the deposits. Then, the magnetic head is mounted on the tip of the suspension arm so that the polished end surface, i.e., the end surface in which ends of the main pole and the return yoke are exposed can face the magnetic disk.

It is described in a document issued from the Institute of Electrical and Electronics Engineers (IEEE) that to increase a recording density in a magnetic disk by setting a sharp magnetic field gradient, it is effective to narrow a gap between the end of the main pole and the end of the return yoke exposed to the end surface opposite to the magnetic disk (pp. 163 to 168, IEEE Transactions on Magnetics, vol. 38, No. 1, January 2002).

On the other hand, it is reported in a document (pp. 21 to 27, Technical Research Report by the Institute of Electronics, Information and Communication Engineers, Vol. 101, No. 499, MR 2001 to 87) that as a result of optimizing a structure by using two-dimensional computer simulation, a magnetic field generated from the magnetic head becomes weak and consequently a magnetic field of a strength necessary for data recording cannot be obtained when lengths (TH; throat height) (equivalent to yoke height of the invention; YH) of opposed portions of the main pole and the return yoke which face each other through the narrow gap exceed 100 nm.

That is, to obtain a magnetic field of a strength sufficient for data recording after a magnetic field gradient is made sharp to increase a recording density, the main pole and the return yoke must be placed as close as possible to each other, and the lengths TH of the opposed portions must be made short.

However, since the conventional magnetic head is formed by polishing the articles deposited on the substrate by the end surface extending in the deposition direction, the lengths TH of the opposed portions of the main pole and the return yoke are determined by a degree of the polishing. Thus, accuracy of polishing work must be increased to set the length of the opposed portion to several tens of nm. However, it is impossible to increase the accuracy of the polishing work to about several tens of nm at the present technical level.

### Disclosure of Invention

Objects of the present invention are to provide a thin-film magnetic head capable of increasing a recording density in a magnetic recording medium, and its manufacturing method.

The present invention has been developed to achieve the above objects.

A first aspect of the present invention is directed to a thin-film magnetic head comprising a main pole which has a tip exposed to a surface opposite to a magnetic recording medium and which is made of a magnetic thin film extending in a direction apart from the opposite surface; a return path yoke which is disposed roughly parallel to the main pole and which has a tip exposed to the opposite surface and which is made of a magnetic thin film extending in a direction apart from the opposite surface; a coil which forms a magnetic field in the tip of the main pole; and an auxiliary yoke made of a magnetic thin film which is formed in the opposite surface in noncontact with the tip of the main pole through a predetermined gap.

According to the invention, since a length of an opposed portion of an auxiliary yoke arranged through a predetermined gap in a main pole with respect to the same depends on a film thickness of the auxiliary yoke, the length of the opposed portion can be highly accurately set to an order of several tens of nm. Thus, a magnetic field applied from the main pole to the magnetic recording medium can be made sharp, and a magnetic field strength sufficient for recording can be achieved.

A second aspect of the present invention is directed to a thin-film magnetic head comprising a magnetic yoke which has a tip exposed to a surface opposite to a magnetic recording medium; a magneto-resistance effect element which obtains a signal magnetic flux from the magnetic recording medium through the magnetic yoke; and an auxiliary yoke made of a magnetic thin film which is formed in the opposite surface in noncontact with the tip of the magnetic yoke through a predetermined gap.

A third aspect of the present invention is directed to a method of manufacturing a thin-film magnetic head comprising a deposition step of depositing a main pole made of a magnetic thin film, a return path yoke made of a magnetic thin film, and a coil made of a conductive thin film on a substrate through an insulating layer; a polishing step of polishing an end surface in a deposition direction of the articles deposited in the deposition step to form a surface opposite to a magnetic recording medium; and an auxiliary yoke formation step of forming, in the opposite surface, an auxiliary yoke made of a magnetic thin film which extends to be flush with the opposite surface in noncontact with the main pole through a predetermined gap.

A fourth aspect of the present invention is directed to a method of manufacturing a thin-film magnetic head comprising a deposition step of depositing a main pole, a return path yoke and a coil on a substrate through an insulating material; and an auxiliary yoke formation step of depositing and forming, in the same direction as that of the articles, an auxiliary yoke made of a magnetic thin film which extends to be flush with an opposite surface in noncontact with the main pole through a predetermined gap in the opposite surface of one end of a deposition direction of the articles deposited in the deposition step which faces a magnetic recording medium.

### Brief Description of Drawings

FIG. 1A is an appearance perspective view of a magnetic head seen from a magnetic disk side according to a first embodiment of the present invention;
FIG. 1B is a partially expanded view showing a partially expanded main portion of FIG. 1A;
FIG. 2A is a sectional view of the magnetic head of FIG. 1A;
FIG. 2B is a partially expanded view showing a partially expanded main portion of FIG. 2A;
FIG. 3 is a graph showing a gradient distribution of a recording magnetic field in a track direction when a separation length between a main pole and an auxiliary yoke of the magnetic head is a parameter;
FIG. 4 is a graph showing a gradient distribution of a recording magnetic field in a track direction when a thickness of the auxiliary yoke is a parameter;
FIG. 5 is a graph showing a relationship between the number of surfaces of the auxiliary yoke opposite to the main pole and a maximum magnetic field strength;
FIG. 6 is a graph showing a recording magnetic field strength distribution in a track width direction when the separation length is a parameter;
FIG. 7 is a graph showing a relationship between a recording magnetic field strength and a magnetic field gradient when a size of the auxiliary yoke is changed;
FIG. 8A is a bottom view of an auxiliary yoke having a rectangular opening portion seen from the magnetic disk side;
FIG. 8B is a contour map showing a recording magnetic field strength distribution applied to the magnetic disk when the auxiliary yoke of FIG. 8A is employed;
FIG. 9A is a bottom view of an auxiliary yoke having an opening portion in which roughly circular openings are formed at four corners seen from the magnetic disk side;
FIG. 9B is a contour map showing a recording magnetic field strength distribution applied to the magnetic disk when the auxiliary yoke of FIG. 9A is employed;
FIGS. 10A and 10B are explanatory views showing a first example of a method of manufacturing an auxiliary yoke;
FIGS. 11A to 11C are explanatory views showing a second example of a method of manufacturing an auxiliary yoke;
FIGS. 12A and 12B are explanatory views showing a third example of a method of manufacturing an auxiliary yoke;
FIGS. 13A and 13B are explanatory views showing a fourth example of a method of manufacturing an auxiliary yoke;
FIGS. 14A and 14B are explanatory views showing a processing method when a size of an auxiliary yoke is changed and irregularities are formed in an opposite surface;
FIG. 15 is a graph showing magnetic recording characteristics when a thickness of the auxiliary yoke manufactured by the method described above with reference to FIGS. 12A and 12B is a parameter;
FIG. 16 is a sectional view showing a magnetic head according to a second embodiment of the invention;
FIG. 17 is a view showing a modified example of FIG. 16;
FIG. 18 is a sectional view showing a magnetic head according to a third embodiment of the invention;
FIG. 19 is a view showing a modified example of FIG. 18;
FIG. 20 is a sectional view showing a magnetic head according to a fourth embodiment of the invention;
FIG. 21 is a view showing a modified example of FIG. 20;
FIG. 22 is a sectional view showing a recording/reproducing magnetic head according to a fifth embodiment in which the magnetic head of FIGS. 2A and 2B and the magnetic head of FIG. 18 are formed on the same substrate; and
FIG. 23 is a sectional view showing a recording/reproducing magnetic head according to a sixth embodiment in which the magnetic head of FIG. 16 and the magnetic head of FIG. 20 are formed on the same substrate.

### Best Mode for Carrying Out the Invention

Next, the preferred embodiments of the present invention will be described in detail with reference to the accompanying drawings.

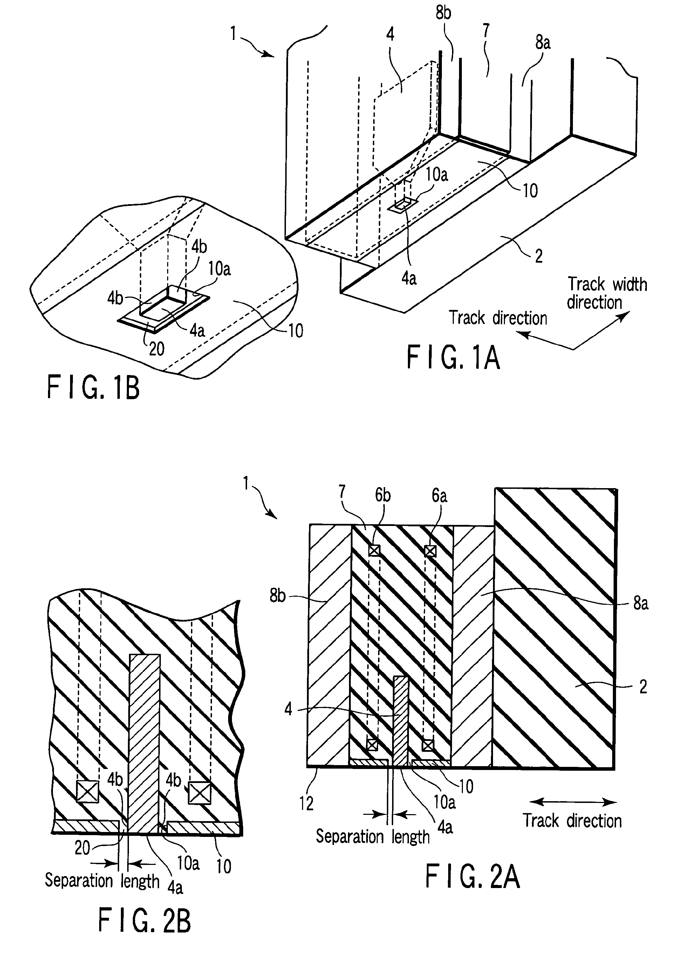

FIG. 1A is a schematic perspective view of a thin-film magnetic head (simply referred to as a magnetic head 1, hereinafter) according to a first embodiment of the invention seen from a magnetic disk (not-shown magnetic recording medium). FIG. 1B is a partially expanded view of a partially expanded main portion of FIG. 1A. FIG. 2A is a sectional view of the magnetic head 1 cut along a surface extending in a track direction of a magnetic disk. Further, FIG. 2B is a partially expanded view of a partially expanded main portion of FIG. 2A. In FIG. 1A, a coil is omitted to simplify the drawing.

The track direction indicates a direction along a track concentrically formed in a magnetic disk (not shown), in other words, a direction orthogonal to the radial direction of the magnetic disk. A track width direction indicates the radial direction of the magnetic disk. For example, the magnetic head 1 of the embodiment functions as a recording head for recording information in a magnetic disk (not shown) of a perpendicular magnetic recording system which has a double-layer film structure of soft magnetic layers.

The magnetic head 1 of the embodiment is formed by depositing a plurality of materials on a flat substrate 2 made of an insulating material such as altec (Al₂O₃-TiC). According to the embodiment, a deposition direction of the materials coincides with the track direction. Articles deposited on the substrate 2 include a main pole 4 of a magnetic thin film made of, e.g., iron silicon nitrogen (FeSiN) or the like, two copper coils 6a, 6b, two return path yokes 8a, 8b made of magnetic thin films, e.g., cobalt zircon niobium (CoZrNb) or the like, and the like. The two coils 6a, 6b are disposed apart from the main pole 4 in a positional relation of sandwiching the main pole 4 in the deposition direction, and the two return path yokes 8a, 8b are disposed apart in a positional relation of sandwiching the coils.

Preferably, the distance between the main pole 4 and the two return path yokes 8a, 8b is set to 1000 to 5000 nm, and the distance is set to about 3600 nm according to the embodiment. The coils 6a, 6b are arranged between the main pole 4 and the two return path yokes 8a, 8b. Between the two return path yokes 8a, 8b, for example, an insulating layer 7 made of alumina (Al₂O₃), silicon oxide (SiO₂) or the like is disposed to seal in the main pole 4 and the coils 6a, 6b.

The deposits and the substrate 2 have an opposite surface 12 formed to be flush by polishing an end surface extending in a deposition direction. In other words, the opposite surface 12 of the magnetic head 1 extends roughly parallel to the deposition direction. Then, the magnetic head 1 is arranged in a posture which causes the opposite surface 12 to face the surface of a magnetic disk (not shown).

An auxiliary yoke 10 made of a magnetic thin film such as iron silicon nitrogen (FeSiN) is disposed in the opposite surface 12. The auxiliary yoke 10 of the embodiment is disposed by etching the insulating layer 7, and its surface extends in the deposition direction to constitute the opposite surface 12 with an end surface of the substrate 2, a tip surface 4a of the main pole 4, and end surfaces of the return path yokes 8a, 8b.

As shown in FIG. 1B, the auxiliary yoke 10 has a rectangular opening which surrounds the rectangular tip surface 4a (tip) of the main pole 4 exposed to the opposite surface 12 in noncontact. In other words, the rectangular opening has four opening end surfaces 10a equivalent to a thickness of the auxiliary yoke 10, and all the opening end surfaces 10a face the main pole 4 in noncontact.

The auxiliary yoke 10 constitutes a magnetic circuit with the main pole 4, the return path yokes 8a, 8b, and the coils 6a, 6b.

That is, a gap between a side face 4b near the tip surface 4a of the main pole 4 and the opening end surface 10a of the auxiliary yoke 10 functions as a magnetic gap, and it is set to a predetermined separation length. The separation length is preferably set to 10 to 200 nm, and the separation length is set to 100 nm according to the embodiment. Hereinafter, a rectangular frame-shaped magnetic gap will be set as an opening portion 20.

In FIGS. 2A and 2B, the coils 6a, 6b are wound once to simplify the drawings. However, the two coils 6a, 6b are wound three times and interconnected at the centers. The main pole 4 is excited by applying currents reverse to each other to the coils 6a, 6b through a driving circuit (not shown), and a strong recording magnetic field is generated in the tip surface 4a of the main pole 4.

Generally, a very hard protective film of a diamondlike carbon (DLC) or the like is formed to adhere to the opposite surface 12. However, it is not shown here to simplify explanation.

Now, consideration will be given to a magnetic field strength distribution of the magnetic head 1 constituted in the aforementioned manner based on a calculation result which uses a 3-dimensional finite element method. Incidentally, a gap between the side face 4b of the main pole 4 and the opening end surface 10a of the auxiliary yoke 10, i.e., a separation length of the opening portion 20, is constant over the entire circumference of the main pole 4.

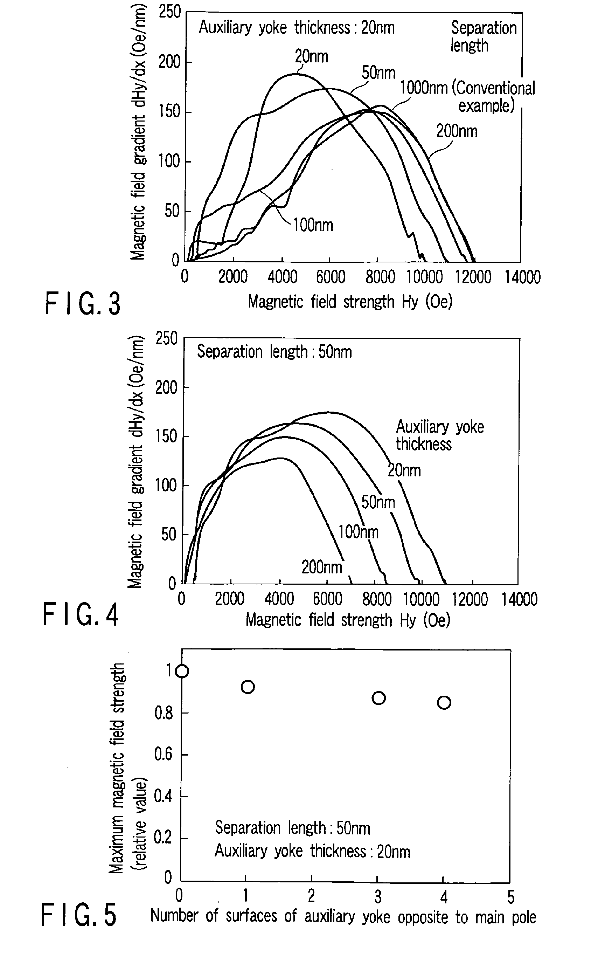

FIG. 3 shows a relationship between a magnetic field strength and a magnetic field gradient which are obtained from the magnetic field strength distribution in the track direction when the separation length of the magnetic head 1 of the aforementioned structure is varied. It can be understood from the drawing that in the magnetic head of a conventional structure of no auxiliary yoke 10 (i.e., separation length is 1000 nm), a magnetic field strength distribution having a peak magnetic field gradient in an area of a relatively high magnetic field strength is set, creating a problem of not always obtaining a high magnetic field gradient by a magnetic field strength necessary for recording. On the other hand, it can be understood that by mounting the auxiliary yoke 10 and setting a separation length to be smaller than 200 nm, a magnetic field gradient can be increased by magnetic field strengths of a wide range.

However, when the separation length is reduced to 20 nm, a magnetic field gradient becomes large again only in a narrow area, and a reduction is simultaneously accelerated in a maximum recording magnetic field. Thus, it can be said that an area of a separation length smaller than 10 nm is improper.

FIG. 4 shows a relationship between magnetic field strength and magnetic field gradient when the thickness of the auxiliary yoke 10 of the magnetic head 1 of the aforementioned structure is varied. It can be understood from the drawing that since a thicker auxiliary yoke 10 causes a conspicuous reduction in maximum magnetic field strength, the foregoing effects can be provided by making the auxiliary yoke 10 thinner than at least 200 nm.

Thus, in an optimal combination of a separation length and an auxiliary yoke thickness (a separation length is 50 nm and a thickness of the auxiliary yoke 10 is 20 nm under the calculation conditions), as shown in FIG. 5, even when the opening portion 20 is formed to surround all the four sides of the tip surfaces 4a of the main pole 4, a reduction in the maximum magnetic field strength is limited to about 15% of that of the case of no auxiliary yoke (number of opposite surfaces is 0). As a result, it is possible to increase a linear recording density and to reduce medium noise by making a recording magnetic field sharp.

Concerning a gap between the side face 4b of the main pole 4 of a reading side in a traveling direction of the magnetic head 1 relative to the magnetic disk, i.e., in the track direction, and the opening end surface 10a of the auxiliary yoke 10, there is no direct relation to a recording state, and thus a separation length thereof can be freely set. However, as can be understood from FIG. 5, since almost no change occurs in the recording magnetic field strength even when a separation length of one side is changed from a narrow value equal to those of the other three sides to an infinite value, no problems occur even when very small gaps are formed in all four sides of the tip surface 4a of the main pole 4.

Next, consideration will be given to a magnetic field strength distribution in a track width direction of the magnetic head 1.

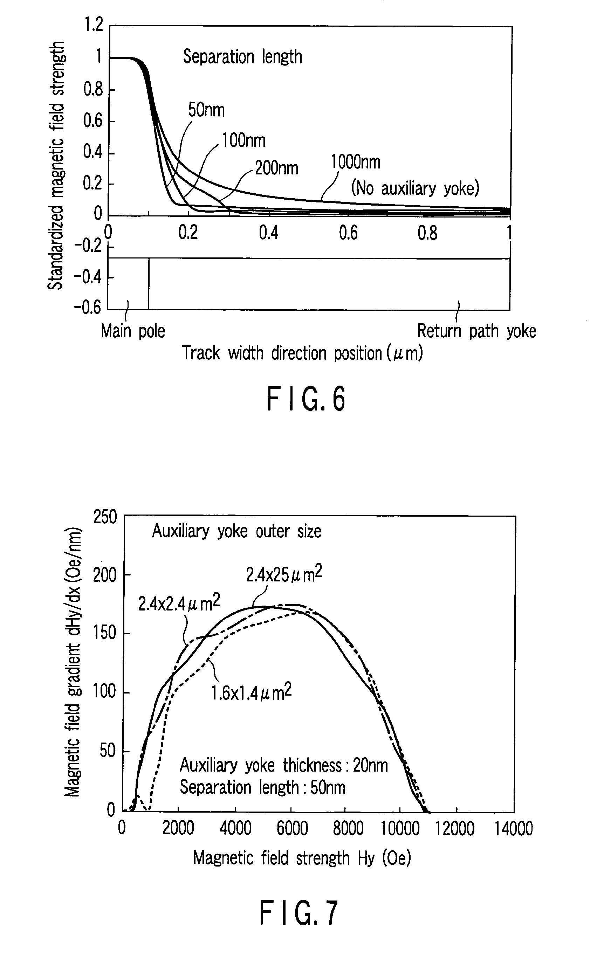

FIG. 6 shows a relationship between a distance apart from the center of the main pole 4 in the track width direction and a magnetic field strength in its position when the separation length is a parameter. It can be understood that spread of magnetic field strength distribution is suppressed more as the separation length becomes smaller. That is, by reducing the separation length, it is possible to suppress the spread of the magnetic field strength distribution with respect to a track of the magnetic disk, to make a magnetic field sharp in the track width direction, and to increase a recording density.

Accordingly, by forming the rectangular opening of the auxiliary yoke 10 to surround all the four sides of the tip surface 4a of the main pole 4 with the four end surfaces 10a through the relatively narrow gap, a sharp magnetic field can be simultaneously achieved in the track direction and the track width direction. As a result, it is possible to increase a surface recording density by the increases in the linear recording density and the track density.

According to calculation by the inventors et al., effects by the formation of the rectangular frame-shaped opening portion 20 can be provided when the auxiliary yoke 10 has a size just to bridge the two return path yokes 8a, 8b (outer size: width 2.4 µm × length 25 µm). However, as shown in FIG. 7, it has been found that there is almost no change in obtained magnetic field sharpness even when the size of the auxiliary yoke is reduced (outer size: width 2.4 µm × length 2.4 µm). It has additionally been found that no great deterioration occurs even when the size is further reduced and the auxiliary yoke 10 is separated from the return path yoke 8a, 8b (outer size: width 1.6 µm × length 1.4 µm).

From the foregoing, it is apparent that no deterioration occurs in the magnetic field gradient even when the size of the auxiliary yoke 10 is reversely increased to exceed the distance between the two return path yokes 8a, 8b. Accordingly, the magnetic head 1 of the embodiment has a feature that a degree of freedom is large concerning the outer size and the positional relation of the auxiliary yoke 10 to the return path yokes 8a, 8b. On the other hand, the film thickness of the auxiliary yoke 10, and the size of the opening portion 20, i.e., the separation length, are important for generating a sharp magnetic field and obtaining a sufficient magnetic field strength.

Regarding the opening portion 20, a shape may be contrived by using the fact that the sharpness of the magnetic field is influenced by the separation length.

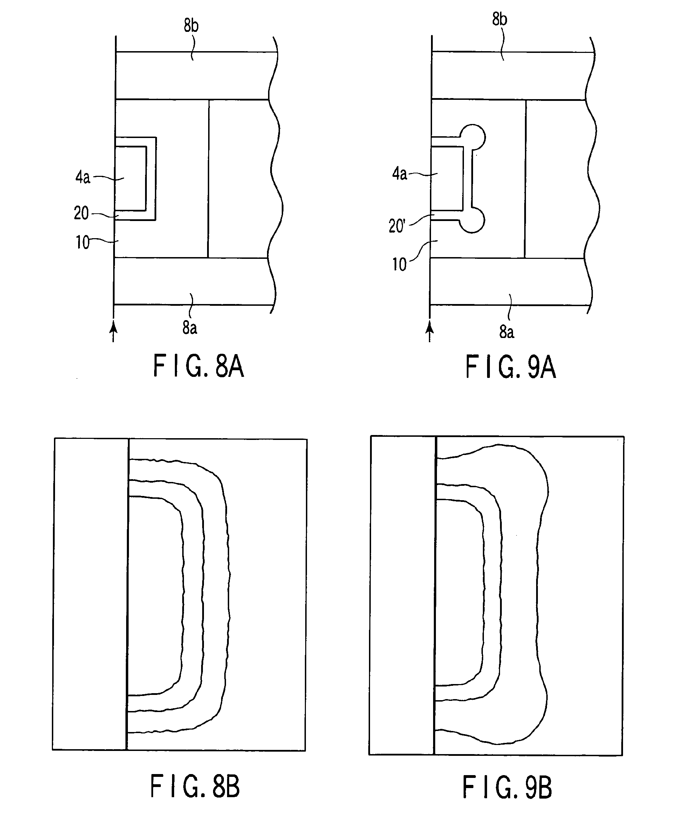

FIG. 8A shows the rectangular frame-shaped opening portion 20 which forms a fixed gap around the tip surface 4a of the main pole 4 as described above. FIG. 8B is a contour map of a strength distribution of a magnetic field applied to the magnetic disk when the opening portion 20 of such a shape is employed. In contrast, FIG. 9A shows an opening portion 20' of a shape in which roughly circular openings are formed at four corners, and FIG. 9B is a contour map of a strength distribution of a magnetic field when the opening portion 20' is employed.

It can be understood that the magnetic field strength distribution of the magnetic disk can be changed by changing the shape of the opening portion 20' as shown in FIG. 9A. Accordingly, for example, concerning a magnetization transfer shape which draws a gentle circular arc from a track center to an end and which occurs in the case of a narrow track width or in the case of large spacing between the magnetic recording head and the magnetic recording medium, the opening portion shape of the auxiliary yoke can be a circular arc of a polarity opposite to that of magnetization transfer, and a proper linear magnetization transfer shape can be realized.

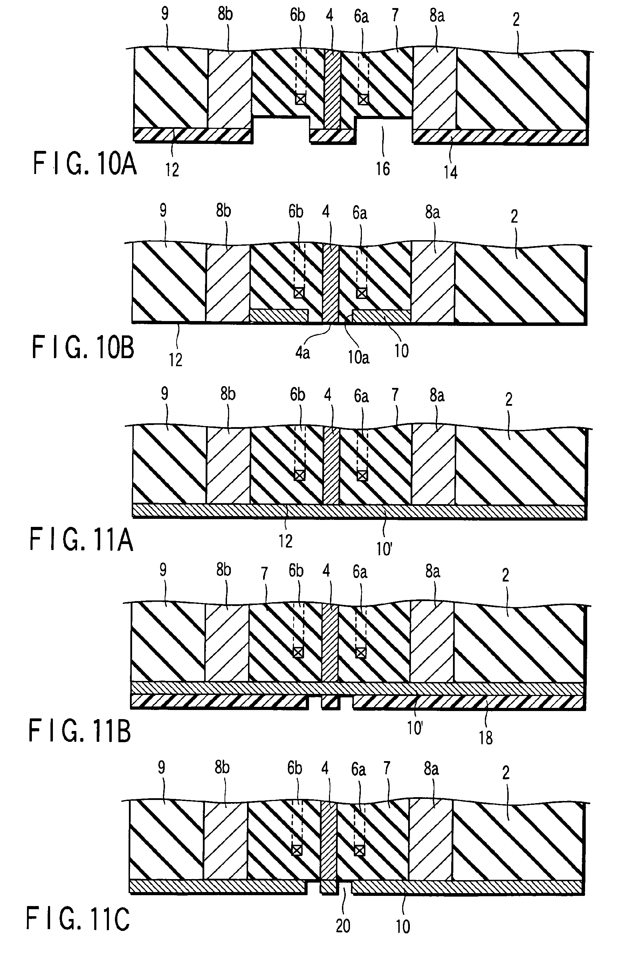

Next, a method of manufacturing the magnetic head 1 of the aforementioned structure will be described by taking some examples with reference to FIGS. 10A to 14B.

First, as shown in FIGS. 10A and 10B, a layer of one return path yoke 8a is formed on the substrate 2, and the coil 6a, the main pole 4, the coil 6b, and the other return path yoke 8b are sequentially deposited through the insulating layer 7. A protective layer 9 is formed outside the return path yoke 8b when necessary. Then, the opposite surface 12 extending in the deposition direction of each layer is formed by polishing.

Subsequently, a magnetic thin film is bonded to the polished opposite surface 12 to form the auxiliary yoke 10. Hereinafter, a method of forming and bonding the auxiliary yoke 10 to the opposite surface 12 will be described.

According to a first example, first, as shown in FIG. 10A, a photoresist 14 is patterned on the opposite surface 12, and a trench 16 is formed by ion beam etching or reactive ion etching to be similar in shape and thickness to the auxiliary yoke 10.

Subsequently, as shown in FIG. 10B, a magnetic thin film is bonded and lifting-off is executed, whereby the magnetic thin film is buried in the trench 16 to form the auxiliary yoke 10.

By forming the auxiliary yoke 10 as in the case of the example, it is possible to highly accurately form the auxiliary yoke 10 while the length of the end surface 10a opposite to the main pole 4 (i.e., a thickness of the auxiliary yoke 10) is an order of nm. Thus, a sharp magnetic field strength applied to the magnetic disk can be achieved, and a magnetic field of a strength sufficient for recording can simultaneously be formed.

According to a second example, first, as shown in FIG. 11A, a magnetic thin film 10' for the auxiliary yoke 10 is formed and bonded to the opposite surface 12. Subsequently, as shown in FIG. 11B, a photoresist 18 is patterned. Using this as a mask, by ion beam etching or reactive ion etching, as shown in FIG. 11C, an opening portion 20 is formed in the magnetic thin film 10'.

In the case of manufacturing the auxiliary yoke 10 based on the example, a magnetic thin film similar to that of the auxiliary yoke 10 is also formed in the tip surface 4a of the main pole 4. Accordingly, as compared to the first example, accuracy of the separation length can be increased. In other words, a gap between the main pole 4 and the auxiliary yoke 10 can be highly accurately formed depending on the shape of the resist 18.

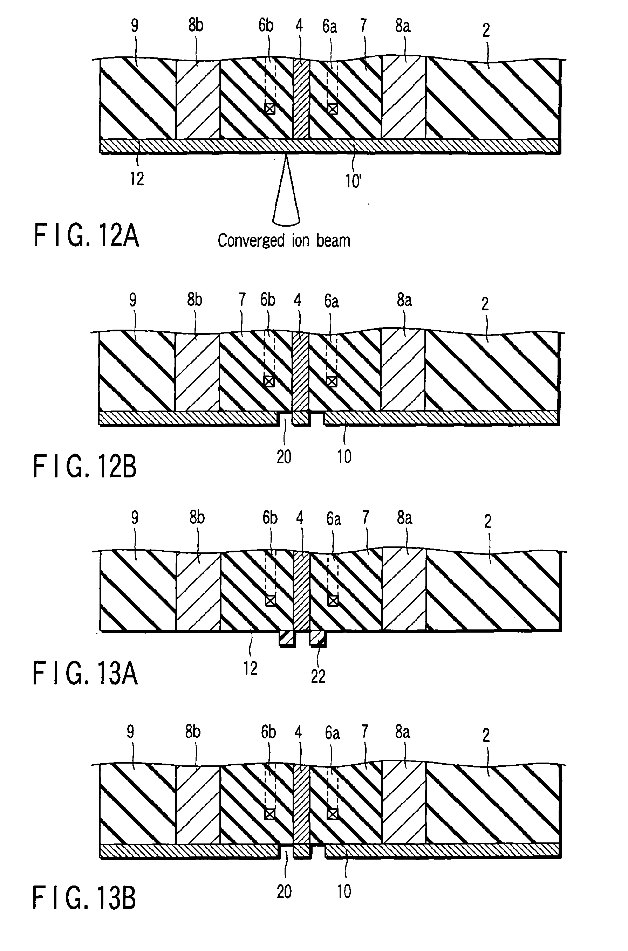

According to a third example, as shown in FIG. 12A, a magnetic thin film 10' for the auxiliary yoke 10 is deposited on the opposite surface 12. Then, as shown in FIG. 12B, an opening portion 20 is formed by using a converged ion beam etching device (not shown). Thus, an auxiliary yoke 10 similar to that of the second example can be formed. According to this example, effects similar to those of the second example can be provided without using a photoresist 18 similar to that of the second example.

According to a fourth example, as shown in FIG. 13A, a photoresist 22 of a shape corresponding to the opening portion 20 is formed in the opposite surface 12 by using an electron beam exposure device (not shown). Then, as shown in FIG. 13B, a magnetic thin film 10' for the auxiliary yoke 10 is deposited from above the photoresist, and lifting-off is executed, whereby the auxiliary yoke 10 having the opening portion 20 is formed. According to this example, effects similar to those of the second and third examples can be provided.

Incidentally, the auxiliary yoke 10 is formed between the two return path yokes 8a, 8b in the first example (FIGS. 10A and 10B), and the auxiliary yoke 10 is formed on a full surface of the opposite surface 12 in the second to fourth examples. As described above, however, there are no problems since an influence of an outer size of the auxiliary yoke 10 on characteristics of the magnetic head 1 of the invention is very small. In other words, the outer size of the auxiliary yoke 10 is not limited to that of each of the examples.

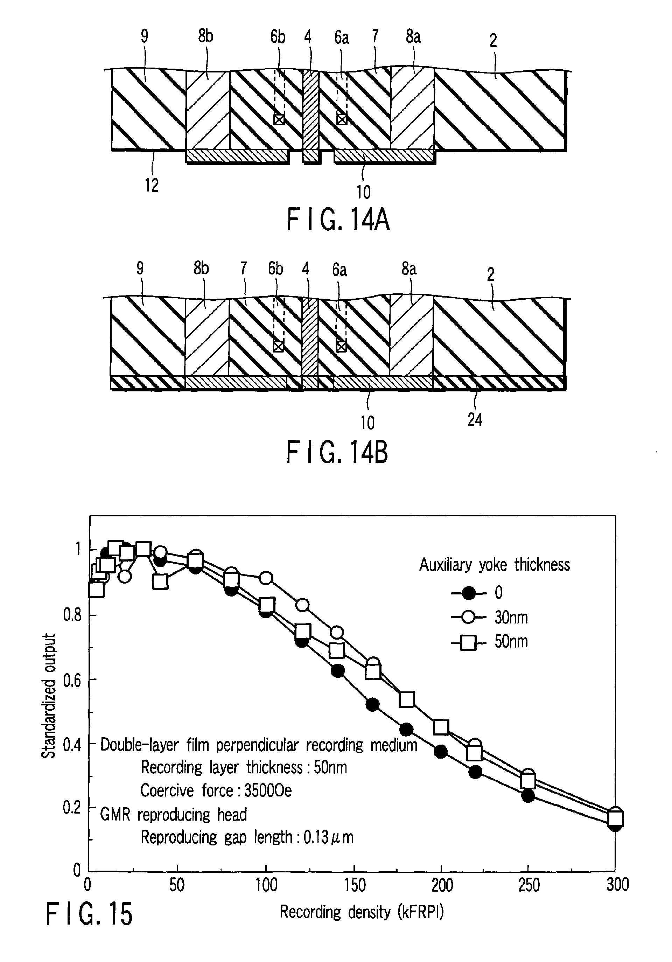

In the first example, since the auxiliary yoke 10 is formed by being buried in the insulating layer 7, no irregularities occur in the opposite surface 12 of the magnetic head 1. In contrast, in the second to fourth examples, for example, when the size of the auxiliary yoke 10 does not fully cover the opposite surface 12 as shown in FIG. 14A, a step equal to a thickness of the auxiliary yoke 10 is formed with the opposite surface 12. When this step becomes a problem, as occasion demands, as shown in FIG. 14B, the step can be removed by fixing a nonmagnetic material 24 in a recess thereof.

Further, from the standpoint of floating characteristics, abrasion or the like of the magnetic head 1, a size and a position of the nonmagnetic material 24 can be determined to be optimal for the auxiliary yoke 10.

As described above, according to the embodiment, since the auxiliary yoke 10 made of the thin film is formed to adhere to the opposite surface 12 of the magnetic head 1, the auxiliary yoke 10 can be highly accurately and easily formed by setting its film thickness to, e.g., 200 nm or lower.

According to the second to fourth examples, since the auxiliary yoke 10 and the tip of the main pole 4 can be simultaneously formed, it is possible to highly accurately set a separation length between the main pole 4 and the auxiliary yoke 10.

Additionally, there is a feature that positioning accuracy between the main pole 4 and the auxiliary yoke 10 is relaxed.

FIG. 15 shows magnetic recording characteristics evaluated by combining the magnetic head 1 comprising the auxiliary yoke 10 manufactured according to the third example described above with reference to FIGS. 12A and 12B with a magnetic disk (not shown) having a double-layer film for perpendicular magnetic recording. According to the drawing, as compared to a conventional magnetic head (auxiliary yoke thickness 0) of a structure completely similar except for no auxiliary yoke 10, higher recording resolution is realized for the magnetic head 1 of the invention which comprises the auxiliary yoke 10, and especially a sharp recording magnetic field is achieved in the track direction. Thus, according to the system of the invention, it is possible to increase a recording density by an increase in a linear recording density.

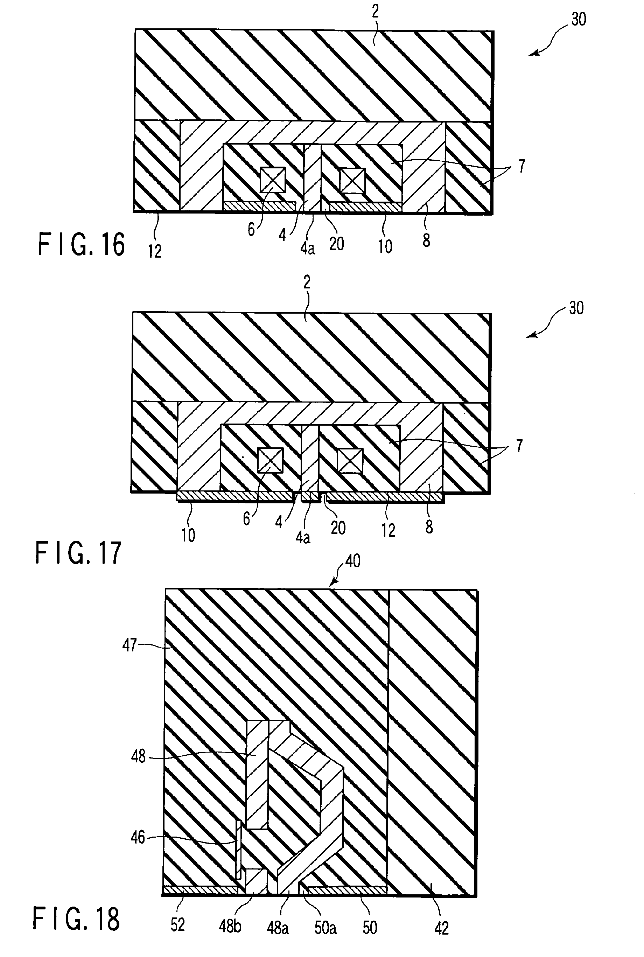

Next, a magnetic head 30 according to a second embodiment of the invention will be described with reference to FIGS. 16 and 17. Functional components similar to those of the first embodiment are denoted by similar reference numerals, and detailed description thereof will be omitted.

The magnetic head 30 of this embodiment is characterized by depositing a plurality of thin films in a direction perpendicular to a surface 12 opposite to a magnetic disk (not shown) to be formed. In other words, the opposite surface 12 of the magnetic head 30 becomes a surface roughly parallel to a substrate 2.

The magnetic head 30 is a so-called planar thin-film single pole magnetic head in which an auxiliary yoke 10 is further deposited on the opposite surface 12 of a main pole 4, a return path yoke 8, a coil 6 and an insulating layer 7 deposited on the substrate 2. The auxiliary yoke 10 comprises an opening portion 20 for forming a gap with the main pole 4, and its surface is made of a magnetic thin film to form the same plane with a tip surface 4a of the main pole 4.

As a method of forming the auxiliary yoke 10, for example, there are a method of forming the auxiliary yoke 10 after a trench similar in shape to the auxiliary yoke 10 is formed in the opposite surface 12 as shown in FIG. 16, and a method of forming the auxiliary yoke 10 by depositing a magnetic thin film including an area of the tip surface 4a of the main pole 4 on the opposite surface 12 as shown in FIG. 17. The method of manufacturing the auxiliary yoke 10 is similar to that of the first embodiment, and thus detailed description thereof will be omitted.

After the formation of the auxiliary yoke 10, when necessary, a nonmagnetic thin film is formed to remove a film thickness direction step formed by the auxiliary yoke 10, and to secure floating characteristics or abrasion characteristics of the magnetic head 30, or a protective film such as DLC (not shown) is formed.

As described above, according to the embodiment, effects similar to those of the first embodiment can be provided. The polishing step of the first embodiment before the formation of the auxiliary yoke is made unnecessary, and the auxiliary yoke 10 can be formed simultaneously in the deposition process. Thus, the number of steps in the manufacturing process can be reduced, and the embodiment is advantageous for miniaturization and weight-reduction.

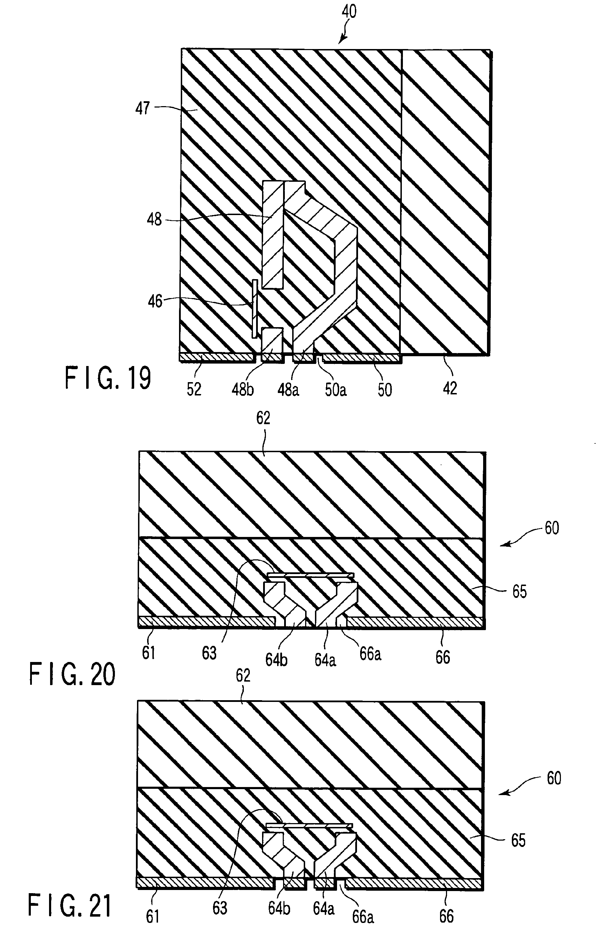

Next, a magnetic head 40 according to a third embodiment of the invention will be described with reference to FIGS. 18 and 19. The first and second embodiments have been described by way of case in which the invention is applied to the recording magnetic head. Here, a case in which the invention is applied to a reproducing magnetic head will be described.

The magnetic head 40 has a structure in which an auxiliary yoke 50 is arranged in an opposite surface 52 of a magnet-resistive effect thin-film magnetic head of a conventional structure to guide a signal magnetic flux from a magnetic disk (not shown) through a magnetic yoke 48 to a (anisotropic, giant, and tunnel) magneto-resistance effect element 46.

As shown in FIG. 18, the magnetic head 40 is formed in a manner that a magnetic yoke 48 and a magneto-resistance effect element 46 are formed, and then a surface 52 opposite to a magnetic disk is set in a predetermined position of the magnetic yoke 48 by polishing. Subsequently, in the polished opposite surface 52, an auxiliary yoke 50 made of a magnetic thin film is formed to be flush with a tip surface of the magnetic yoke 48 through a gap with tips 48a, 48b of the magnetic yokes 48.

When the auxiliary yoke 50 is formed, there are a method of forming the auxiliary yoke 50 after a trench similar in shape to the auxiliary yoke 50 is formed in the opposite surface 52 as shown in FIG. 18, and a method of forming the auxiliary yoke 50 by forming a magnetic thin film including a tip surface area of the magnetic yoke 48 on the opposite surface 52 as shown in FIG. 19. Here, description of a method of manufacturing the auxiliary yoke 50 will be omitted.

Subsequently, when necessary, a nonmagnetic thin film is formed to remove a film thickness direction step formed by the auxiliary yoke 50, and to secure floating characteristics or abrasion characteristics of a magnetic recording head, or a protective film such as a DLC is formed.

It can easily be surmised from a reciprocal theory that a pole structure for realizing the sharp recording magnetic field concerning the recording magnetic heads 1, 30 of the foregoing first and second embodiments is also a structure for achieving a sharp reproducing sensitivity distribution by regarding the main pole 4 of the recording single pole head as a magnetic yoke 48 of a reproducing yoke type magneto-resistive effect head. Thus, the auxiliary yoke 50 present in the track width direction side face of the tip of the magnetic yoke 48 is useful as a magnetic shield for reducing side fade crosstalk.

On the other hand, it is has been pointed out that waveform distortion occurs in the case of applying the yoke type magneto-resistive effect head to perpendicular magnetic recording. The distortion can be reduced by drawing a signal magnetic flux only from the magnetic disk directly below the tip surface of the magnetic yoke 48 thereinto. Thus, the auxiliary yoke 50 present in the track direction is useful as a magnetic shield for reducing flowing-in of a magnetic flux from other than a portion directly below the recording medium. Accordingly, the waveform distortion is reduced to increase a recording density.

Therefore, by forming an opening portion 50a of the auxiliary yoke 50 to surround the entire circumference of the tip of the magnetic yoke 48 through a space of a relatively narrow separation length, problems in track and track width directions can simultaneously be solved, whereby a recording density can be increased.

Next, a magnetic head 60 according to a fourth embodiment of the invention will be described with reference to FIGS. 20 and 21. As in the case of the recording magnetic head having the planar structure, the magnetic head 60 is manufactured by depositing a plurality of thin films in a direction perpendicular to a surface 61 opposite to a magnetic disk (not shown).

As shown in FIG. 20, the magnetic head 60 is manufactured by depositing a (anisotropic, giant, and tunnel) magneto-resistive effect element 63, magnetic yokes 64a, 64b, and an insulating layer 65 on a substrate 62, and forming an auxiliary yoke 66 made of a magnetic thin film to be flush with a tip surface of the magnetic yoke 64 through a gap with the magnetic yokes 64a, 64b in the surface 61 of the deposits opposite to the magnetic disk.

As a method of forming the auxiliary yoke 66, there are a method of forming the auxiliary yoke 66 after a trench similar in shape to the auxiliary yoke 66 is formed in the opposite surface 61 as shown in FIG. 20, and a method of forming the auxiliary yoke 66 by depositing a magnetic thin film including a tip surface area of the magnetic yoke 64 on the opposite surface 61 as shown in FIG. 21. Subsequently, as occasion demands, a nonmagnetic thin film is formed to remove a film thickness direction step formed by the auxiliary yoke 66, and to secure floating characteristics or abrasion characteristics of a magnetic head 60, or a protective film such as a DLC is formed.

As described above, according to this embodiment, effects similar to those of the third embodiment can be provided. As compared to the third embodiment, a polishing step before the formation of the auxiliary yoke is made unnecessary, the auxiliary yoke 66 can be formed simultaneously in the deposition process of each layer, and the number of manufacturing steps can be reduced. Thus, the embodiment is advantageous for miniaturization and weight-reduction.

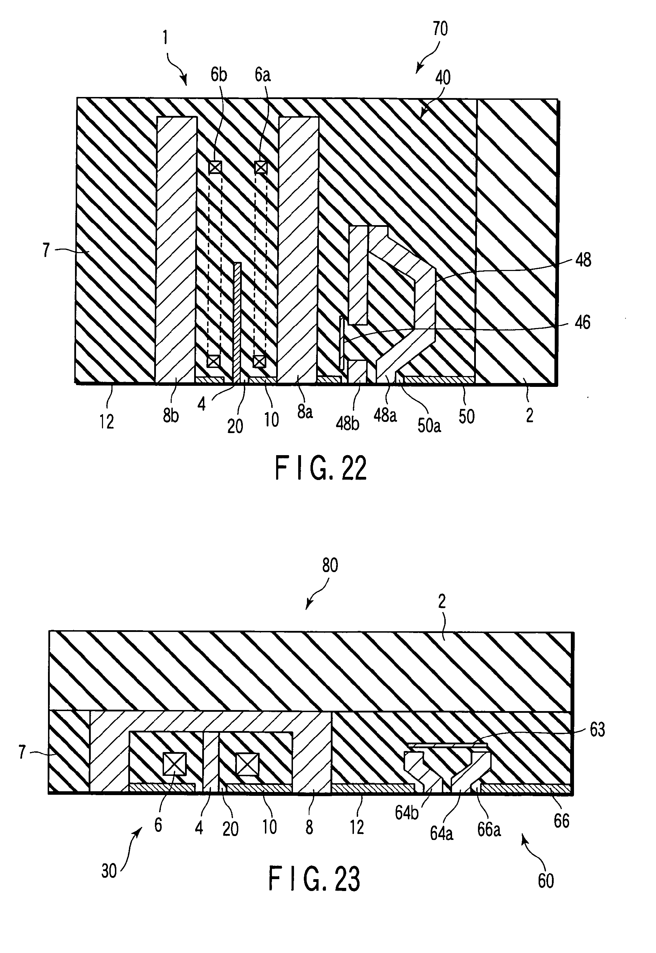

Next, a magnetic head 70 according to a fifth embodiment of the invention will be described with reference to FIG. 22. The magnetic head 70 has a structure in which the magnetic head 1 of the first embodiment and the magnetic head 40 of the third embodiment are formed on the same substrate 2. In other words, the magnetic head 70 is a recording/reproducing head for recording/reproducing information on/from a magnetic disk.

In the case of manufacturing the magnetic head 70, the magnetic head 40 of the third embodiment is first manufactured on the substrate 2, and subsequently the magnetic head 1 of the first embodiment is manufactured thereon. Description of a specific method of manufacturing each of the magnetic heads 1, 40 will be omitted.

According to the embodiment, auxiliary yokes 10, 50 of the two magnetic heads 1, 40 are simultaneously formed. That is, by polishing an opposite surface 12 after the recording magnetic head 1 is manufactured and depositing a magnetic thin film on the surface 12 to execute patterning, the auxiliary yokes 10, 50 of the recording magnetic head 1 and the reproducing magnetic head 40 are simultaneously formed together. Description of a method of manufacturing each of the auxiliary yokes 10, 50 will also be omitted.

As described above, according to the embodiment, the auxiliary yoke 10 of the recording magnetic head 1 and the auxiliary yoke 50 of the reproducing magnetic head 40 can be simultaneously formed together to reduce the number of manufacturing steps. Moreover, according to the embodiment, it is possible to simultaneously provide a recording magnetic head capable of increasing a recording density in a magnetic disk and a reproducing magnetic head capable of reproducing data recorded at a high recording density.

Next, a magnetic head 80 according to sixth embodiment of the invention will be described with reference to FIG. 23. The magnetic head 80 has a planar structure in which the magnetic head 30 of the second embodiment and the magnetic head 60 of the fourth embodiment are formed on the same substrate 2. This magnetic head 80 is also a recording/reproducing head.

In the case of manufacturing the magnetic head 80, the two magnetic heads 30, 60 are simultaneously manufactured in parallel. As in the case of the magnetic head 70 of the fifth embodiment, the magnetic head 80 can be formed by simultaneously forming auxiliary yokes 10, 66 together. In other words, the embodiment can provide effects similar to those of the fifth embodiment. According to the embodiment, since the auxiliary yokes 10, 66 can be simultaneously formed in a deposition process of another layer in addition to nonnecessity of a polishing step before the formation of the auxiliary yokes, the number of steps can be further reduced compared with that of the fifth embodiment.

The invention is not limited to the foregoing embodiments, and various changes and modifications can be made within the scope of the invention.

### Industrial Applicability

As described above, when the invention is applied to the recording thin-film magnetic head, the film thickness of the auxiliary yoke can easily and highly accurately set low, and thus a recording magnetic field can be made sharp without any conspicuous reductions thereof. As a result, it is possible to increase recording density by increases in linear recording density and track density.

Furthermore, when the invention is applied to the reproducing thin-film magnetic head, it is possible to increase a recording density by reductions in side face crosstalk and waveform distortion. Since the auxiliary yoke can be formed together with the recording single pole magnetic head, it is possible to easily realize a combination with the recording head.

In other words, it is possible to provide a high resolution recording/reproducing magnetic head.

## Claims

1. A thin-film magnetic head **characterized by** comprising:
a main pole which has a tip exposed to a surface opposite to a magnetic recording medium and which is made of a magnetic thin film extending in a direction apart from the opposite surface;
a return path yoke which is disposed roughly in parallel with the main pole and which has a tip exposed to the opposite surface and which is made of a magnetic thin film extending in a direction apart from the opposite surface;
a coil which forms a magnetic field in the tip of the main pole; and
an auxiliary yoke made of a magnetic thin film which is formed in the opposite surface in noncontact with the tip of the main pole through a predetermined gap.

2. The thin-film magnetic head according to claim 1, **characterized in that** the auxiliary yoke is formed to be flush with the tip of the main pole and the tip of the return path yoke in the opposite surface.

3. The thin-film magnetic head according to claim 1, **characterized in that** a film thickness of the auxiliary yoke is 5 to 200 nm, and a gap between the main pole and the auxiliary yoke is 10 to 200 nm.

4. The thin-film magnetic head according to claim 1 or 3, **characterized in that** the auxiliary yoke has an opening portion which exposes the tip of the main pole to the opposite surface in noncontact with the tip through the predetermined gap.

5. The thin-film magnetic head according to claim 1 or 2, **characterized by** comprising a protective film which protects the opposite surface.

6. The thin-film magnetic head according to claim 1, **characterized in that** the auxiliary yoke is deposited in the same direction as that for the main pole, the return path yoke and the coil.

7. A thin-film magnetic head **characterized by** comprising:
a magnetic yoke which has a tip exposed to a surface opposite to a magnetic recording medium;
a magneto-resistive effect element which obtains a signal magnetic flux from the magnetic recording medium through the magnetic yoke; and
an auxiliary yoke made of a magnetic thin film which is formed in the opposite surface in noncontact with the tip of the magnetic yoke through a predetermined gap.

8. The thin-film magnetic head according to claim 7, **characterized in that** the auxiliary yoke is formed to be flush with the tip of the magnetic yoke in the opposite surface.

9. The thin-film magnetic head according to claim 7 or 8, **characterized by** comprising a protective film which protects the opposite surface.

10. A thin-film magnetic head **characterized by** forming the thin-film magnetic head of claim 1 and the thin-film magnetic head of claim 7 together on the same substrate.

11. The thin-film magnetic head according to claim 10, **characterized in that** the auxiliary yoke of the thin-film magnetic head of claim 1 and the auxiliary yoke of the thin-film magnetic head of claim 7 are simultaneously disposed roughly parallel to the substrate.

12. A method of manufacturing a thin-film magnetic head **characterized by** comprising:
a deposition step of depositing a main pole made of a magnetic thin film, a return path yoke made of a magnetic thin film, and a coil made of a conductive thin film on a substrate through an insulating layer;
a polishing step of polishing an end surface in a deposition direction of the articles deposited in the deposition step to form a surface opposite to a magnetic recording medium; and
an auxiliary yoke formation step of forming, in the opposite surface, an auxiliary yoke made of a magnetic thin film which extends to be flush with the opposite surface in noncontact with the main pole through a predetermined gap.

13. The method according to claim 12, **characterized in that** the auxiliary yoke formation step includes:
a step of forming a magnetic thin film on the opposite surface formed in the polishing step; and
a step of forming the gap in the magnetic thin film.

14. The method according to claim 12 or 13, **characterized in that** the auxiliary yoke formation step includes a step of forming an opening portion which exposes the tip of the main pole to the opposite surface in noncontact with the tip through the predetermined gap.

15. The method according to claim 12, **characterized in that** a film thickness of the auxiliary yoke is 5 to 200 nm, and a gap between the main pole and the auxiliary yoke is 10 to 200 nm.

16. A method of manufacturing a thin-film magnetic head **characterized by** comprising:
a deposition step of depositing a main pole, a return path yoke and a coil on a substrate through an insulating material; and
an auxiliary yoke formation step of depositing and forming, in the same direction as that of the articles deposited in the deposition step, an auxiliary yoke made of a magnetic thin film which extends to be flush with an opposite surface in noncontact with the main pole through a predetermined gap in the opposite surface of one end of a deposition direction of the articles which faces a magnetic recording medium.

17. The method according to claim 16, **characterized in that** the auxiliary yoke formation step includes:
a step of depositing a magnetic thin film on the opposite surface; and
a step of forming the gap in the magnetic thin film.

18. The method according to claim 16 or 17, **characterized in that** the auxiliary yoke formation step includes a step of forming an opening portion which exposes the tip of the main pole to the opposite surface in noncontact with the tip through the predetermined gap.

19. The method according to claim 16, **characterized in that** a film thickness of the auxiliary yoke is 5 to 200 nm, and a gap between the main pole and the auxiliary yoke is 10 to 200 nm.
